# EUROPÄISCHE PATENTSCHRIFT

(11) **EP 0 641 813 B1**
(45) Veröffentlichungstag und Bekanntmachung des Hinweises auf die Patenterteilung: **03.06.1998**
(21) Anmeldenummer: 94110562.9
(22) Anmeldetag: 07.07.1994
(51) Int. Cl.: C08G 63/54, C08G 63/80, C08G 63/88, C08L 67/06

(54) **Verfahren zur Herstellung hochmolekularer Polyester**
Process for production of high molecular polyesters weight
Procédé de production de polyesters à poids moléculaire élevé

(30) Priorität: 06.09.1993 DE 4330062
(43) Veröffentlichungstag der Anmeldung: 08.03.1995
(73) Patentinhaber: HÜLS AKTIENGESELLSCHAFT, 45764 Marl (DE)
(72) Erfinder: Kleine Homann, Walter, Dr., D-48249 Dülmen (DE); Grosse-Puppendahl, Thomas, D-45721 Haltern (DE); Brügging, Wilhelm, Dr., D-45665 Recklinghausen (DE)

(56) Entgegenhaltungen:
- EP-A- 0 049 823
- EP-A- 0 344 733
- EP-A- 0 346 735
- EP-A- 0 615 995
- DE-A- 2 509 790

## Beschreibung

Gegenstand der Erfindung ist ein Verfahren zur Herstellung von hochmolekularen Polyestern durch Umsetzen aromatischer Dicarbonsäure mit einem Gemisch aus Alkan- und Alkendiolen unter weitgehendem Ausschluß von Sauerstoff in Gegenwart eines Katalysators.

Hochmolekulare Polyester sind ausgezeichnete Werkstoffe mit spezifischen Eigenschaften, die sie befähigen, als Rohstoff für technisch hochwertige, stark belastbare Produkte zu dienen. Typisch für diesen Anwendungsbereich ist, daß häufig - nach technischen Maßstäben beurteilt - relativ kleine Mengen mit einem exakt vorgegebenen hohen Molekulargewicht nachgefragt werden.

Da in der großtechnischen Produktion Polyester kontinuierlich bzw. diskontinuierlich in großen Mengen mit einem einheitlichen Molekulargewicht anfallen, ist es meist unwirtschaftlich und technisch auch schwierig, kleinere Teilmengen mit einem festgelegten hohen Molekulargewicht zur Verfügung zu stellen.

Aus dem Stand der Technik sind Polyester mit hohem Molekulargewicht bekannt. Sie enthalten u. a. Reste ungesättigter Monomerkomponenten, die ggf. mit thermolabilen Verbindungen vernetzt werden (DE-OSS 25 09 726; 25 09 790; 25 52 424). Charakterisch für diesen Stand der Technik ist, daß bereits bei der Herstellung das endgültige Molekulargewicht festgelegt werden muß. Eine nachträgliche Manipulation des Molekulargewichtes ist unmöglich bzw. führt zu einem Abfall der Produkteigenschaften.

Grundsätzlich ist es auch aus dem Stand der Technik bekannt, Polyester einer Festphasennachkondensation zu unterwerfen. Hierbei sind üblicherweise jedoch relativ lange Zeiten erforderlich. Weiterhin wird nur eine geringfügige Erhöhung der Viskosität erreicht.

Aufgabe der vorliegenden Erfindung war es, einen Weg zu finden, nach dem es möglich ist, auch kleinere Mengen Polyester mit hohem Molekulargewicht in kurzer Zeit vorteilhaft herzustellen.

Diese Aufgabe wird erfindungsgemäß durch ein Verfahren gelöst, in dem die Polykondensationsstufe bis zu einer Viskositätszahl im Bereich von 50 - 140 cm³/g geführt wird und der so erhaltene Polyester anschließend einer Festphasennachkondensation bis zum Erreichen der notwendigen Viskositätszahl unterworfen wird.

Die Polyester werden durch Veresterung oder Umesterung und anschließende Polykondensation von aromatischen Dicarbonsäuren oder deren polyesterbildenden Derivaten sowie dem entsprechenden Diolgemisch in Gegenwart von Katalysatoren hergestellt (Sorenson und Campbell, **Preparative Methods of Polymer Chemistry**, Interscience Publishers Inc., (N. Y.), 1961, Seiten 111 bis 127; **Kunststoff-Handbuch**, Band VIII, C. Hanser Verlag München, 1973; J. Polym. Sci., Part A 1, 4, Seiten 1851 bis 1859, 1966).

Die Reaktionstemperaturen liegen im Bereich von 160 bis 350 °C, vorzugsweise im Bereich von 170 bis 280 °C. Die genannte Reaktion wird unter weitgehendem Ausschluß von Sauerstoff durchgeführt. Aus diesem Grunde wird in einer Inertgasatmosphäre gearbeitet. Als Inertgas eignen sich z. B. Edelgase, Stickstoff, Kohlendioxid etc. Es wird bei Normaldruck oder im Vakuum gearbeitet. Bevorzugt wird die Polykondensationsstufe im Vakuum durchgeführt.

Nach dem erfindungsgemäßen Verfahren werden vorzugsweise Poly(ethylenterephthalat) und Poly(butylenterephthalat) hergestellt.

Als aromatische Dicarbonsäure kommt zur Hauptsache Terephthalsäure infrage. Es können aber auch andere aromatische Dicarbonsäuren wie z. B. Phthalsäure, Isophthalsäure, Naphthalindicarbonsäure u. ä. sowie deren Gemische eingesetzt werden.

Bis zu 30 Mol-% der aromatischen Dicarbonsäure in den Polyestern können durch an sich bekannte andere, ggf. aliphatische, Dicarbonsäuren mit 2 bis 36 C-Atomen im Kohlenstoffgerüst ersetzt werden. Beispiele geeigneter Dicarbonsäuren sind Isophthalsäure, Phthalsäure, 1.4-Cyclohexandicarbonsäure, Adipinsäure, Sebazinsäure, Azelainsäure, Decandicarbonsäure, Dimerfettsäure.

Die Diolkomponente wird einerseits durch Alkandiole mit 2 bis 12 C-Atomen in der Kohlenstoffkette gebildet. Bevorzugt sind hierbei Ethylenglykol und Butandiol-1.4. Zum anderen werden Alkendiole mit 4 bis 12 C-Atomen in der Kohlenstoffkette eingesetzt. Bevorzugt werden Butendiol-1.4., 2-Pentendiol-1.5, 3-Methyl-2-penten-1.5-diol verwendet.

Bis zu 30 Mol-% der Alkandiolkomponente des Polyesters können durch andere Diole, wie beispielsweise Neopentylglykol, 1.4- bzw. 1.3-Dimethylolcyclohexan oder deren Gemisch ersetzt sein.

Das Alkandiol und Alkendiol werden im Verhältnis 0,1 - 99,9 Mol-% bis 99,9 - 0,1 Mol-%, vorzugsweise 80 - 99,5 Mol-% bis 20 - 0,5 Mol-% eingesetzt.

Unter den Begriff Polyester werden auch Blockcopolyester gerechnet. Derartige Produkte werden z. B. in **Chimia** 28 (9), Seiten 544 bis 552 (1974) und in **Rubber Chemistry and Technology** 50, Seiten 688 bis 703 (1977) beschrieben. Diese Blockcopolyester enthalten neben den obengenannten aromatischen Dicarbonsäuren und Diolen ein Poly(oxyalkylen)diol mit einem Molgewicht im Bereich von etwa 600 bis 2 500. Bevorzugte Poly(oxyalkylen)diole sind Poly(oxyethylen)diol, Poly(oxypropylen)diol und Poly(oxytetramethylen)diol. Der Anteil der Poly(oxyalkylen)diole liegt im Bereich von 4 bis 40 Gew.-%, vorzugsweise von 10 bis 35 Gew.-% (bezogen auf den gesamten Blockcopolyester).

Die Polykondensationsstufe wird anfangs bis zu einer Viskositätszahl J = 50 - 140 cm³/g, vorzugsweise J = 60 - 120 cm³/g geführt.

Im Anschluß an die Polykondensationsstufe wird der niedrigmolekulare Polyester in Form von Granulaten, Chips oder Pulver in fester Phase thermisch behandelt. Die Behandlung kann z. B. in einem Taumeltrockner, einem Rotationsverdampfer, einem Kolonnenreaktor o. ä. durchgeführt werden. Es wird unter einer Inertgasatmosphäre bei Temperaturen gearbeitet, die 5 bis 60 °C, vorzugsweise 5 bis 30 °C, unterhalb der Schmelztemperatur des Polyesters liegen. Als Inertgase kommen z. B. Edelgase, Stickstoff oder Kohlendioxid in Frage.

Die Nachkondensationszeit kann nochmals erheblich verkürzt werden, indem in Gegenwart eines Radikalbildners gearbeitet wird. Für diese bevorzugte Arbeitsweise werden als Radikalbildner solche gewählt, deren Zerfall bei den obengenannten Temperaturen für die Nachkondensation eine Halbwertszeit im Bereich von 5 s - 18 h, vorzugsweise von 10 Min. - 12 h, aufweist.

Die Radikalbildner werden in einer Menge im Bereich von 0,001 - 8 Gew.-%, bevorzugt von 0,01 - 5 Gew.-%, bezogen auf den Polyester eingesetzt.

Als Radikalbildner kommen organische Peroxide wie (cyclo)aliphatische bzw. aromatische Peroxide, Hydroperoxide oder Perketale, wie z. B. 2.5-Bis(tert. butylperoxi)-2.5-dimethylhexan, Diisopropylbenzol-mono-hydroperoxid, Dicumylperoxid und 3.3.6.6.9.9-Hexamethyl-1.2.4.5-tetraoxacyclononan, organische Verbindungen mit einer labilen C-C-Bindung wie z. B. 2.3-Dimethyl-2.3-diphenylbutan, 3.4-Dimethyl-3.4-diphenylhexan und Poly-1.4-diiso-propylbenzol, oder organische Verbindung mit einer labilen N-N-Bindung wie z. B. 2.2'-Azo-bis(2-acetoxy-propan) in Frage.

Zusätzliche Einzelheiten zu den Radikalbildnern bezüglich Zerfallstemperaturen, Halbwertszeiten etc, können bekannten Firmendruckschriften der Hersteller entnommen werden. Solche Druckschriften sind beispielsweise **Organic Peroxides for Crosslinking Polyolefins and Elastomers** der Fa. elf atochem, Deutschland, aus 10/92 oder **Initiators for Polymer Production** der Fa. Akzo, Niederlande, aus 4/89.

Die Zugabe der Radikalbildner erfolgt sinnvollerweise z. B. zusammen mit anderen Zuschlagstoffen, beispielsweise während des Austrags aus der Polykondensationsanlage über einen Extruder oder während der Compoundierung auf einem Mischextruder. Es können auch Ein- oder Zweischneckenkneter oder Co-Kneter verwendet werden. Die Mischtemperatur liegt zwischen 160 und 320 °C, vorzugsweise zwischen 220 und 280 °C, wobei die Verweilzeit zwischen wenigen Sekunden und mehreren Minuten liegt. Für eine einfachere Zudosierung des Radikalbildners in den Extruder kann es in einigen Fällen sinnvoll sein, ein Trägermaterial zu verwenden, beispielsweise erhalten durch Einarbeiten des Radikalbildners in ein geeignetes Polymer. Dies hat den Vorteil, daß so auch sehr geringe Mengen Radikalbildner sicher zudosiert werden können.

Die Polyester, die nach dem erfindungsgemäßen Verfahren hergestellt worden sind, weisen eine Viskositätszahl bis ≤ 500 cm³/g, vorzugsweise von 100 bis 450 cm³/g, auf.

Die nach dem erfindungsgemäßen Verfahren erhaltenen Polyester können auf üblichen Maschinen durch Spritzguß oder Extrusion zu Formmassen verarbeitet werden.

Die Polyester können noch Hilfs- und Zusatzstoffe enthalten. Hierfür kommen z. B. Nucleierungs-, Mattierungs-, Fließmittel oder andere Verarbeitungshilfsmittel sowie Pigmente, Füll- und Verstärkungsstoffe in Frage.

Nucleierungs-, Mattierungs-, Fließmittel oder andere Verarbeitungshilfsmittel können in Mengen bis zu 6 Gew.-%, bevorzugt von 0,2 bis 3,5 Gew.-%, bezogen auf die Gesamtmischung, im Polyester enthalten sein.

Pigmente, Füll- und Verstärkungsstoffe sind in Mengen bis zu 60 Gew.-%, bevorzugt von 1 bis 50 Gew.-%, bezogen auf die Gesamtmischung, im Polyester enthalten.

Das erfindungsgemäße Verfahren weist eine Reihe von Vorteilen auf:
- Es können große Mengen an Grundpolykondensat schnell und wirtschaftlich kontinuierlich oder diskontinuierlich hergestellt werden.
- Es kann im Vergleich zum Stand der Technik sehr schnell die gewünschte hohe Endviskositätszahl erreicht werden.
- Insbesondere kleinere Mengen an Polyester können gezielt auf eine geforderte hohe Viskositätszahl wirtschaftlich eingestellt werden.
- Die guten Allgemeineigenschaften wie thermische bzw. mechanische Stabilität, Verarbeitungsstabilität, Eigenfarbe u. ä. werden nicht negativ beeinflußt.

Ausgehend von den Polyestern werden Formmassen erhalten, aus denen Folien, Ummantelungen, Profile, Rohre, Hohlkörper sowie Formteile nach dem Spritzgußverfahren hergestellt werden.

Der angeführte Parameter J wurde mit Hilfe der nachstehend genannten Meßmethode bestimmt:

Die Viskositätszahl (J-Wert) wurde an Lösungen von 0,5 g Polyester in 100 ml Phenol/o-Dichlorbenzol (im Gewichtsverhältnis von 1 : 1) bei 25 °C gemessen (DIN 16 779).

Die mit Buchstaben gekennzeichneten Versuche sind nicht erfindungsgemäß.-

### Beispiele

### Beispiel A

100 Gew.-Teile eines thermoplastischen Polyesters mit einem J-Wert von 106 cm³/g, der durch Umesterung von Dimethylterephthalat mit Butandiol-1,4 unter Verwendung von iso-Propyltitanat als Katalysator und anschließender Polykondensation unter vermindertem Druck nach den bekannten Verfahren hergestellt wurde, wird entsprechend Tabelle 1 ohne Radikalbildner in einem Rotationsverdampfer bei 215 °C und unter Stickstoffdurchfluß 24 h nachkondensiert und anschließend ausgefahren. Der Polyester weist dann einen J-Wert von 199 cm³/g auf.

### Beispiel 1

100 Gew.-Teile eines thermoplastischen Polyesters mit einem J-Wert von 112 cm³/g, der durch Umesterung von Dimethylterephthalat mit einer Diolkomponente bestehend aus 99 Mol-% Butandiol-1,4 und 1 Mol-% 2-Butendiol1,4 unter Verwendung von iso-Propyltitanat als Katalysator und anschließender Polykondensation unter vermindertem Druck nach den bekannten Verfahren hergestellt wurde, wird entsprechend Tabelle 1 ohne Radikalbildner in einem Rotationsverdampfer bei 215 °C und unter Stickstoffdurchfluß 24 h nachkondensiert. Der Polyester weist dann einen J-Wert von 225 cm³/g auf.

### Beispiel 2

Der im Beispiel 1 beschriebene Versuch wird wiederholt, wobei die eingesetzte Diolkomponente aus 97 Mol-% Butandiol-1,4 und 3 Mol-% 2-Butendiol-1,4 besteht. Der Ausgangs-J-Wert beträgt 112 cm³/g. Nach der Festphasennachkondensation bei 215 °C/24 h unter Stickstoffdurchfluß weist der Polyester einen J-Wert von 228 cm³/g auf.

### Beispiel 3

Der im Beispiel 1 beschriebene Versuch wird wiederholt, wobei die eingesetzte Diolkomponente aus 95 Mol-% Butandiol-1,4 und 5 Mol-% 2-Butendiol-1,4 besteht. Der Ausgangs-J-Wert beträgt 109 cm³/g. Nach der Festphasennachkondensation bei 215 °C/24 h unter Stickstoffdurchfluß weist der Polyester einen J-Wert von 232 cm³/g auf.

### Beispiel B

Der im Beispiel A beschriebene Versuch wird wiederholt, wobei jedoch bei der Festphasennachkondensation 1 Gew.-% des Radikalbildners zugegeben wird. Der Polyester weist dann einen J-Wert von 198 cm³/g auf.

### Beispiel 4

Der im Beispiel 1 beschriebene Versuch wird wiederholt, wobei jedoch bei der Festphasennachkondensation 1 Gew.-% des Radikalbildners zugegeben wird. Der Polyester weist dann einen J-Wert von 241 cm³/g auf.

### Beispiel 5

Der im Beispiel 1 beschriebene Versuch wird wiederholt, wobei jedoch bei der Festphasennachkondensation 2 Gew.-% eines Radikalbildners zugegeben wird. Der Polyester weist dann einen J-Wert von 267 cm³/g auf.

### Beispiel 6

Der im Beispiel 2 beschriebene Versuch wird wiederholt, wobei jedoch bei der Festphasennachkondensation 1 Gew.-% eines Radikalbildners zugegeben wird. Der Polyester weist dann einen J-Wert von 371 cm³/g auf.

### Beispiel 7

Der im Beispiel 3 beschriebene Versuch wird wiederholt, wobei jedoch bei der Festphasennachkondensation 1 Gew.-% eines Radikalbildners zugegeben wird. Der Polyester weist dann einen J-Wert von 383 cm³/g auf.

### Beispiel C

Der im Beispiel A beschriebene Versuch wird wiederholt, wobei jedoch bei der Festphasennachkondensation 1,5 Gew.-% eines Radikalbildners zugegeben wird. Der Polyester weist dann einen J-Wert von 200 cm³/g auf.

### Beispiel 8

Der im Beispiel 1 beschriebene Versuch wird wiederholt, wobei jedoch bei der Festphasennachkondensation 0,5 Gew.-% eines Radikalbildners zugegeben wird. Der Ausgangs-J-Wert beträgt 104 cm³/g. Nach der Festphasennachkondensaion bei 215 °C/24 h unter Stickstoffdurchfluß weist der Polyester einen J-Wert von 245 cm³/g auf.

### Beispiel 9

Der im Beispiel 8 beschriebene Versuch wird wiederholt, wobei jedoch bei der Festphasennachkondensation 1,5 Gew.-% eines Radikalbildners zugegeben wird. Der Polyester weist dann einen J-Wert von 291 cm³/g auf.

### Beispiel D

Der im Beispiel A beschriebene Versuch wird wiederholt, wobei jedoch bei der Festphasennachkondensation 1 Gew.-% eines Radikalbildners zugegeben wird. Der Polyester weist dann einen J-Wert von 198 cm³/g auf.

### Beispiel 10

Der im Beispiel 9 beschriebene Versuch wird wiederholt, wobei jedoch bei der Festphasennachkondensation 1 Gew.-% eines Radikalbildners zugegeben wird. Der Polyester weist dann einen J-Wert von 248 cm³/g auf.

### Beispiel E

100 Gew.-Teile eines thermoplastischen Polyesters mit einem J-Wert von 106 cm³/g, der durch Umesterung von Dimethylterephthalat mit Butandiol-1,4 unter Verwendung von iso-Propyltitanat als Katalysator und anschließender Polykondensation unter vermindertem Druck nach den bekannten Verfahren hergestellt wurde, wird entsprechend Tabelle 2 ohne Radikalbildner in einem Rotationsverdampfer bei 200 °C und unter Stickstoffdurchfluß 9 h nachkondensiert und anschließend ausgefahren. Der Polyester weist dann einen J-Wert von 159 cm³/g auf.

### Beispiel 11

100 Gew.-Teile eines thermoplastischen Polyesters mit einem J-Wert von 105 cm³/g, der durch Umesterung von Dimethylterephthalat mit einem Diol bestehend aus 80 Mol-% Butandiol-1,4 und 20 Mol-% 2-Butendiol-1,4 unter Verwendung von iso-Propyltitanat als Katalysator und anschließender Polykondensation unter vermindertem Druck nach den bekannten Verfahren hergestellt wurde, wird entsprechend Tabelle 2 ohne Radikalbildner in einem Rotationsverdampfer bei 200 °C und unter Stickstoffdurchfluß 9 h nachkondensiert und anschließend ausgefahren. Der Polyester weist dann einen J-Wert von 179 cm³/g auf.

### Beispiel F

Der im Beispiel E beschriebene Versuch wird wiederholt, wobei jedoch bei der Festphasennachkondensation 0,5 Gew.-% eines Radikalbildners zugegeben wird. Der Polyester weist dann einen J-Wert von 158 cm³/g auf.

### Beispiel 12

Der im Beispiel 11 beschriebene Versuch wird wiederholt, wobei jedoch bei der Festphasennachkondensation 0,5 Gew.-% eines Radikalbildners zugegeben wird. Der Polyester weist dann einen J-Wert von 188 cm³/g auf.

### Beispiel G

100 Gew.-Tl. eines thermoplastischen Polyesters mit einem J-Wert von 106 cm³/g, der durch Umesterung von Dimethylterephthalat mit Butandiol-1.4 unter Verwendung von iso-Propyltitanat als Katalysator und anschließender Polykondensation unter vermindertem Druck nach den bekannten Verfahren hergestellt wurde, wird ohne Radikalbildner in einem Rotationsverdampfer bei 200 °C und unter Stickstoffdurchfluß 12 h nachkondensiert und anschließend ausgetragen. Der Polyester weist einen J-Wert von 163 cm³/g. auf.

### Beispiel 13

100 Gew.-Tl. eines thermoplastischen Polyesters mit einem J-Wert von 110 cm3/g, der durch Umesterung von Dimethylterephthalat mit einer Diolkomponente bestehend aus 95 Mol-% Butandiol-1.4 und 5 Mol-% 2-Butendiol-1.4 unter Verwendung von iso-Propyltitanat als Katalysator und anschließender Polykondensation unter vermindertem Druck nach den bekannten Verfahren hergestellt wurde, wird ohne Radikalbildner in einem Rotationsverdampfer bei 200 °C und unter Stickstoffdurchfluß 8 h nachkondensiert und anschließend ausgetragen. Der Polyester weist einen J-Wert von 173 cm³/g auf.

### Beispiel H

100 Gew.-Tl. eines thermoplastischen Polyesters mit einem J-Wert von 106 cm³/g, der durch Umesterung von Dimethylterephthalat mit Butandiol-1.4 unter Verwendung von iso-Propyltitanat als Katalysator und anschließender Polykondensation unter vermindertem Druck nach den bekannten Verfahren hergestellt wurde, wird mit 1,0 Gew.-% eines Radikalbildners in einem Rotationsverdampfer bei 200 °C und unter Stickstoffdurchfluß 12 h nachkondensiert und anschließend ausgetragen. Der Polyester weist einen J-Wert von 162 cm³/g auf.

### Beispiel 14

100 Gew.-Tl. eines thermoplastischen Polyesters mit einem J-Wert von 110 cm³/g, der durch Umesterung von Dimethylterephthalat mit einem Diol bestehend aus 95 Mol-% Butandiol-1.4 und 5 Mol-% 2-Butendiol-1.4 unter Verwendung von iso-Propyltitanat als Katalysator und anschließender Polykondensation unter vermindertem Druck nach den bekannten Verfahren hergestellt wurde, wird mit 1,0 Gew.-% eines Radikalbildners in einem Rotationsverdampfer bei 200 °C und unter Stickstoffdurchfluß 8 h nachkondensiert und anschließend ausgetragen. Der Polyester weist einen J-Wert von 352 cm³/g auf.

### Beispiel 15

Der im Beispiel 2 beschriebene Versuch wird wiederholt, wobei die Nachkondensationszeit auf 3 h reduziert wird. Der Polyester weist einen J-Wert von 177 cm³/g auf.--

Als Radikalbildner wurden verwendet:
I. 2.3-Dimethyl-2.3-diphenylbutan, z. B. INTEROX® CCDFB der Fa. Peroxid Chemie, Höllriegelskreuth
II. Poly-1.4-diisopropylbenzol, z. B. INTEROX® VP 156 der Fa. Peroxid Chemie, Höllriegelskreuth
III. 2.2'-Azo-di(2-acetoxypropan), z. B. LUAZO® AP der Fa. elf atochem, Frankreich

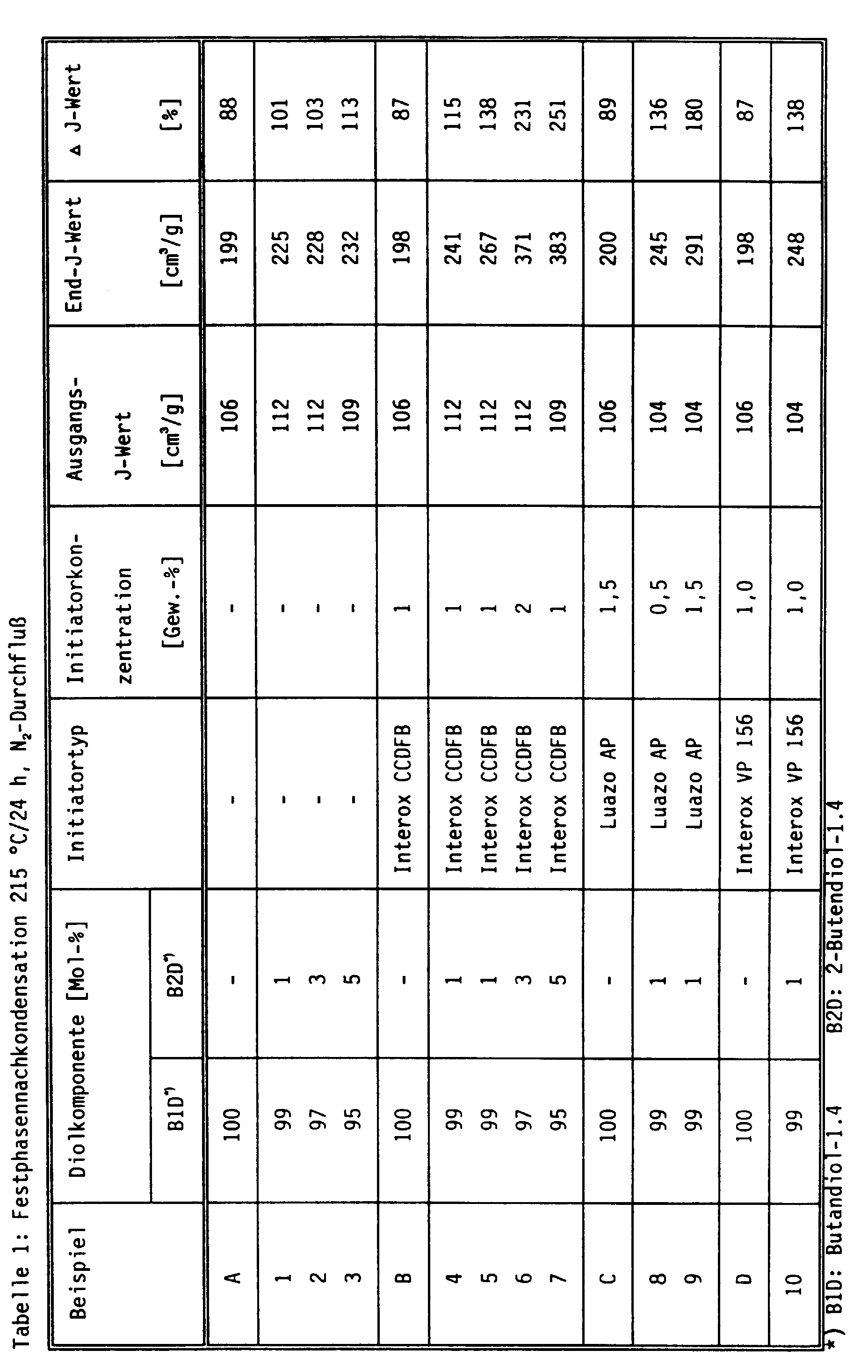

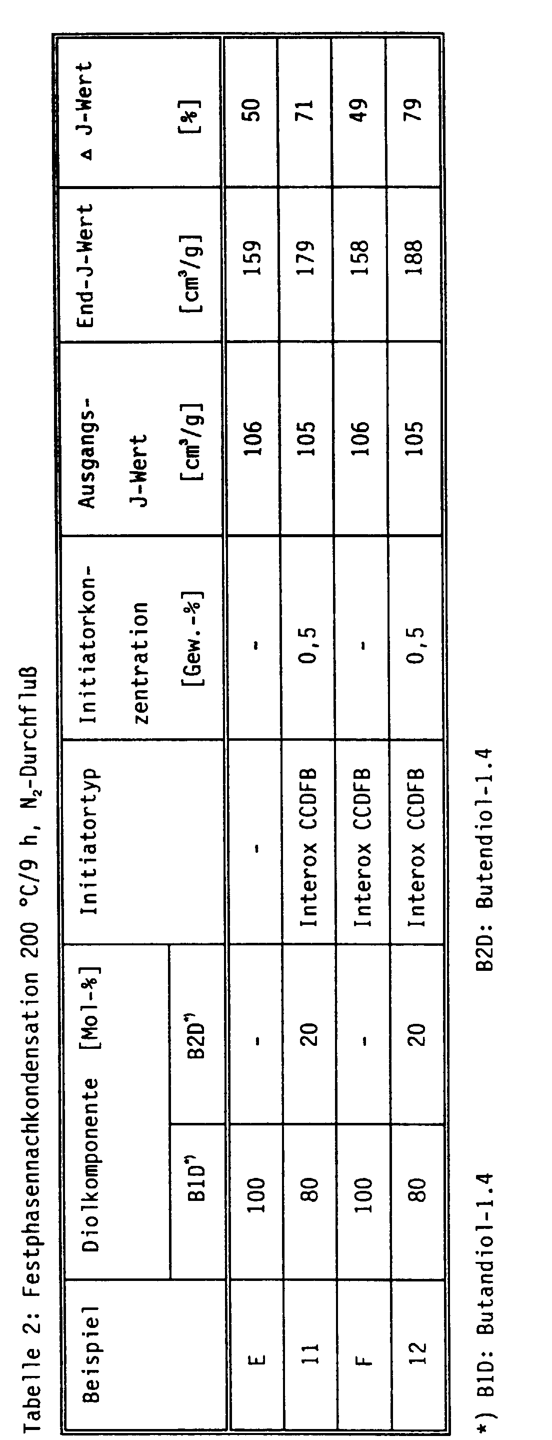

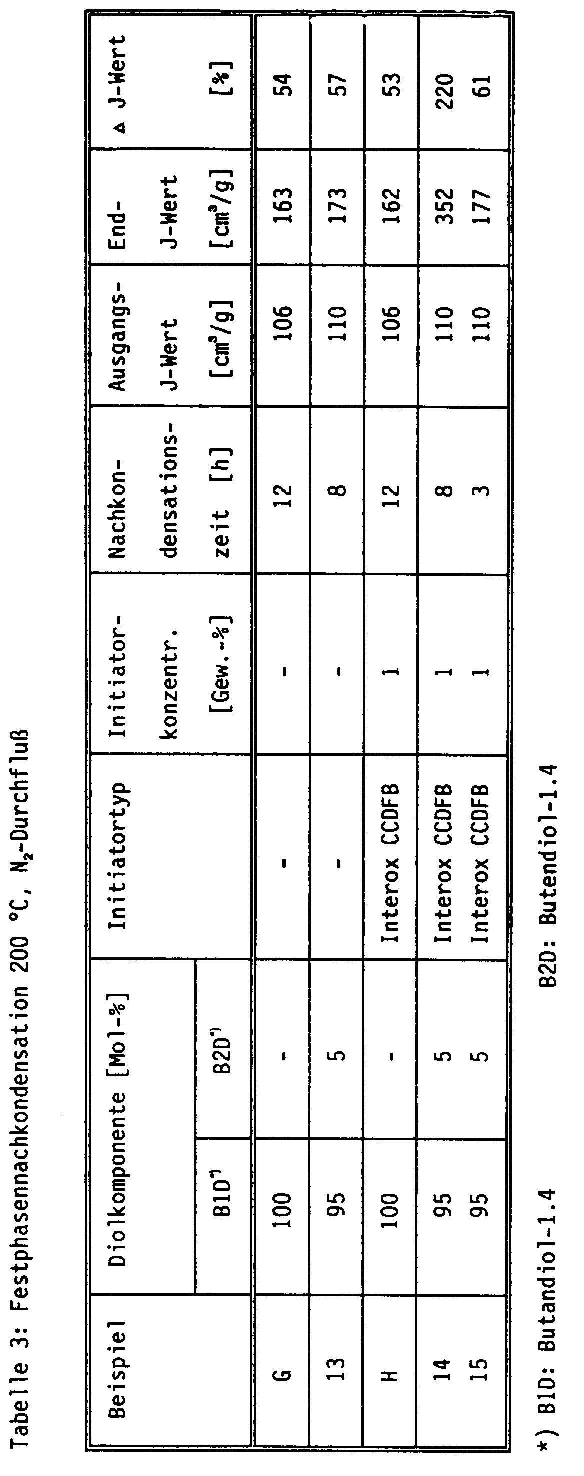

## Patentansprüche

1. Verfahren zur Herstellung von hochmolekularem Polyester durch Umsetzen aromatischer Dicarbonsäure mit einem Gemisch aus Alkan- und Alkendiolen unter weitgehendem Ausschluß von Sauerstoff und in Gegenwart eines Katalysators,
dadurch gekennzeichnet,
daß die Polykondensationsstufe bis zu einer Viskositätszahl im Bereich von 50 bis 140 cm³/g geführt wird und der so erhaltene Polyester anschließend einer Festphasennachkondensation bis zum Erreichen der notwendigen Viskositätszahl unterworfen wird.

2. Verfahren gemäß Anspruch 1,
dadurch gekennzeichnet,
daß die erste Polykondensationsstufe zu einer Viskositätszahl im Bereich von 60 bis 120 cm³/g geführt wird.

3. Verfahren gemäß den Ansprüchen 1 und 2,
dadurch gekennzeichnet,
daß die Festphasennachkondensation bei einer Temperatur durchgeführt wird, die 5 bis 60 °C unterhalb des Schmelzpunktes des Polyesters liegt.

4. Verfahren gemäß den Ansprüchen 1 bis 3,
dadurch gekennzeichnet,
daß bei der Festphasennachkondensation zusätzlich ein Radikalbildner in einer Menge im Bereich von 0,001 bis 8 Gew.-% verwendet wird.

5. Verfahren gemäß den Ansprüchen 1 bis 3,
dadurch gekennzeichnet,
daß bei der Festphasennachkondensation der Radikalbildner in einer Menge im Bereich von 0,01 bis 5 Gew.-% verwendet wird.

6. Verfahren gemäß den Ansprüchen 1 bis 5,
dadurch gekennzeichnet,
daß der Radikalbildner bei Temperaturen im Bereich von 180 bis 280 °C zerfällt.

7. Verfahren gemäß den Ansprüchen 1 bis 6,
dadurch gekennzeichnet,
daß der Radikalbildner mit einer Halbwertzeit im Bereich von 5 s bis 18 h zerfällt.

8. Verfahren gemäß den Ansprüchen 1 bis 7,
dadurch gekennzeichnet,
daß als Radikalbildner organische Peroxide verwendet werden.

9. Verfahren gemäß den Ansprüchen 1 bis 7,
dadurch gekennzeichnet,
daß der Radikalbildner eine labile C-C-Bindung aufweist.

10. Verfahren gemäß den Ansprüchen 1 bis 7,
dadurch gekennzeichnet,
daß der Radikalbildner eine labile organische N-N-Bindung aufweist.

11. Verfahren gemäß den Ansprüchen 1 bis 10,
dadurch gekennzeichnet,
daß eine endgültige Viskositätszahl von ≤ 500 cm³/g eingestellt wird.

12. Verfahren gemäß den Ansprüchen 1 bis 11,
dadurch gekennzeichnet,
daß eine endgültige Viskositätszahl im Bereich von 100 bis 450 cm³/g eingestellt wird.

## Claims

1. A process for preparing a high-molecular-weight polyester by reacting an aromatic dicarboxylic acid with a mixture of alkane- and alkene-diols with substantial exclusion of oxygen and in the presence of a catalyst,
characterized in that the polycondensation step is continued until a viscosity number in the range from 50 to 140 cm³/g is reached and the polyester thus obtained is subsequently subjected to a solid-phase postcondensation until the required viscosity number is reached.

2. A process according to claim 1,
characterized in that the first polycondensation step is continued until a viscosity number in the range from 60 to 120 cm³/g is reached.

3. A process according to either of claims 1 and 2, characterized in that the solid-phase postcondensation is carried out at a temperature which is from 5 to 60°C below the melting point of the polyester.

4. A process according to any of claims 1 to 3, characterized in that in the solid-phase postcondensation a free-radical former is additionally used in an amount in the range from 0.001 to 8% by weight.

5. A process according to any of claims 1 to 3, characterized in that in the solid-phase postcondensation the free-radical former is used in an amount in the range from 0.01 to 5% by weight.

6. A process according to any of claims 1 to 5, characterized in that the free-radical former decomposes at temperatures in the range from 180 to 280°C.

7. A process according to any of claims 1 to 6, characterized in that the free-radical former decomposes with a half-lifetime in the range from 5 s to 18 hours.

8. A process according to any of claims 1 to 7, characterized in that an organic peroxide is used as free-radical former.

9. A process according to any of claims 1 to 7, characterized in that the free-radical former has a labile C-C bond.

10. A process according to any of claims 1 to 7, characterized in that the free-radical former has a labile organic N-N bond.

11. A process according to any of claims 1 to 10, characterized in that a final viscosity number of ≤ 500 cm³/g is achieved.

12. A process according to any of claims 1 to 11, characterized in that a final viscosity number in the range from 100 to 450 cm³/g is achieved.

## Revendications

1. Procédé d'obtention d'un polyester à haut poids moléculaire par réaction d'acide dicarboxylique aromatique avec un mélange d'alkane et d'alkène diols à l'abri largement de l'oxygène et en présence d'un catalyseur,
caractérisé en ce que
l'étape de polycondensation est effectuée jusqu'à un coefficient de viscosité dans la zone de 50 à 140 cm³/g et en ce que le polyester ainsi obtenu est soumis ensuite à une recondensation en phase solide jusqu'à ce que le coefficient de viscosité requis soit atteint.

2. Procédé selon la revendication 1,
caractérisé en ce que
la première étape de polycondensation est conduite jusqu'à un coefficient de viscosité dans la plage de 60 à 120 cm³/g.

3. Procédé selon les revendications 1 et 2,
caractérisé en ce que
la recondensation en phase solide est effectuée à une température qui se situe de 5 à 60°C en dessous du point de fusion du polyester.

4. Procédé selon les revendications 1 à 3,
caractérisé en ce que
lors de la recondensation en phase solide, on utilise en supplément un agent formateur de radicaux en une quantité dans la zone allant de 0,001 à 8 % en poids.

5. Procédé selon les revendications 1 à 3,
caractérisé en ce que
lors de la recondensation en phase solide, l'agent formateur de radicaux est utilisé en une quantité dans la zone allant de 0,01 à 5 % en poids.

6. Procédé selon les revendications 1 à 5,
caractérisé en ce que
l'agent formateur de radicaux se décompose à des températures dans la plage allant de 180 à 280°C.

7. Procédé selon les revendications 1 à 6,
caractérisé en ce que
l'agent formateur de radicaux se décompose avec une durée de demi-valeur dans la zone allant de 5 sec. A 18 heures.

8. Procédé selon les revendications 1 à 7,
caractérisé en ce qu'
on utilise comme agents formateurs de radicaux, des peroxydes organiques.

9. Procédé selon les revendications 1 à 7,
caractérisé en ce que
l'agent formateur de radicaux possède une liaison C-C labile.

10. Procédé selon les revendications 1 à 7,
caractérisé en ce que
l'agent formateur de radicaux possède une liaison N-N organique labile.

11. Procédé selon les revendications 1 à 10,
caractérisé en ce qu'
on ajuste un coefficient de viscosité final de ≤ 500 cm³/g.

12. Procédé selon les revendications 1 à 11,
caractérisé en ce qu'
on ajuste un coefficient de viscosité final dans la plage allant de 100 à 450 cm³/g.
